# EUROPEAN PATENT APPLICATION

(11) **EP 4 468 574 A1**
(43) Date of publication of application: **27.11.2024**
(21) Application number: 22920409.4
(22) Date of filing: 21.10.2022
(51) Int. Cl.: H02K 11/22, H02K 11/215, H02K 11/225, H02K 21/16

(54) **ROTARY DRIVE DEVICE**

(30) Priority: 17.01.2022 JP 2022005240
(71) Applicant: Takano Co., Ltd., Kamiina-gun Nagano 399-4301 (JP)
(72) Inventor: KOGA, Yoshiro, Kamiina-gun, Nagano 399-4301 (JP)
(74) Representative: Haseltine Lake Kempner LLP
(86) International application number: PCT/JP2022/039249
(87) International publication number: WO 2023/135886

(57) **Abstract**

A rotary drive device includes a movable body portion Mm which includes a rotor yoke 5 formed into a ring shape and a rotor magnet 4 having a plurality of magnetic poles disposed along a circumferential direction Ff of the rotor yoke 5; a stationary body portion Mc in which a plurality of stator core portions 2c facing the movable body portion Mm are provided on a stator 2 formed into a ring shape such that stator core portions 2c are disposed at predetermined intervals along the circumferential direction Ff; and a movable body detection portion Md including an encoder sensor 7e which is disposed in at least one accommodation space Sc formed in the stator 2 by removing some of the stator core portions 2c and which detects at least the rotational speed R of the movable body portion Mm.

## Description

### Technical Field

The present invention relates to a rotary drive device which includes a stationary body portion having stator coils wound around a plurality of stator core portions, and a movable body portion having a rotor magnet having a plurality of magnetic poles provided thereon.

### Background Art

In general, in the case of a rotary drive device (servo motor) used in an automatic loom, since controls for starting and stopping rotation, switching rotational speed, switching rotation direction, etc. must be performed frequently with high-speed response during rotating operation, the moment of inertia of the rotary drive device is required to be reduced to a possible degree by reducing the weight of the rotor (movable body portion). Also, the rotary drive device is required have a peculiar, special structure because it must manipulate threads.

Conventionally known techniques for rotary drive devices for such use include a loom and a direct-electromagnetic-drive-type rotary selvedge drive apparatus for a loom disclosed in Patent Documents 1 to 3, and a detection device (detection system) used for control of rotary drive devices disclosed in Patent Documents 4 and 5.

An object of the direct-electromagnetic-drive-type rotary selvedge drive apparatus for a loom disclosed in Patent Document 1 is to solve the following problems. It is necessary to find, for a leno weaving disc, an appropriate bearing device which enables a relatively narrow width structure of a selvedge apparatus, which is simple in structure, and which can be inexpensively incorporated in the selvedge apparatus. In such a case, the drive device has a rotational angle measurement system, and it is necessary to sufficiently shield the electromagnetic drive device, the bearing device, and the rotational angle measurement system from dirt. Specifically, the direct-electromagnetic-drive-type rotary selvedge drive apparatus in which the leno weaving disc is the rotor of the electromagnetic drive device, is configured such that the outer race of a rolling bearing is unrotatively fixed to the leno weaving disc and is coaxially disposed around the center axis of the rotor, and one centering device for supporting the inner race of the rolling bearing is provided in a stator housing.

An object of the direct-electromagnetic-drive-type rotary selvedge drive apparatus for a loom disclosed in Patent Document 2 is to provide a narrow-width-type rotary selvedge drive apparatus in which a leno weaving disc is the rotor of the direct electromagnetic drive device, and a magnetic flux different from the magnetic flux in the radial direction appears between the rotor and the stator. Specifically, the direct-electromagnetic-drive-type rotary selvedge drive apparatus for a loom includes a leno weaving disc which is rotatably supported and has two yarn feeders disposed symmetrically around the center axis and guides weaving yarns supplied from first and second leno weaving bobbins by the respective yarn feeders, the leno weaving disc constitutes the rotor of the electromagnetic drive device, and the stator is accommodated in a housing which can be coupled with the loom. The direct-electromagnetic-drive-type rotary selvedge drive apparatus is configured such that a magnetic flux in the axial direction exists between the rotor and the stator.

The loom disclosed in Patent Document 3 is characterized in that its width is narrow. Specifically, two (large and small) rotational selvedge leno devices, each having a stator, a rotor, and a rotational axle, are arranged side by side in the forward/back direction, and the diameters of these rotational selvedge leno devices increase in the direction opposite the direction of drawing of woven cloth. Leno threads form entire leno selvedges by traversing the thread guide eyelets in the rotors. Two holding cheeks are connected by means of an engageable sliding seat. The holding cheeks are displaceably fixed to a stationary transversal axle by means of a clamping bushing.

An object of a detection device disclosed in Patent Document 4 and adapted to detect the position of magnetic pole of a synchronous motor is to realize a detection device used for a synchronous motor whose rotation is controlled on the basis of a d-phase current instruction and a q-phase current instruction and which does not have a magnetic pole position sensor and being capable of detecting a magnetic pole correction value accurately within a short period of time. Specifically, the detection device includes generation means for generating a magnetic pole correction value on the basis of a difference between a normal-rotation d-phase voltage instruction and a reverse-rotation d-phase voltage instruction for rotating the synchronous motor, wherein these d-phase voltage instructions are generated when predetermined d-phase current instructions are given for rotating the synchronous motor in the normal and reverse directions after detection of a magnetic pole initial position when the synchronous motor is turned on; and correction means for correcting the initial position of the magnetic pole on the basis of the magnetic pole correction value and a sensor reference position, which is the reference position of the sensor of the synchronous motor.

An object of the magnetic angular sensing system disclosed in Patent Document 5 is to provide a sensing system having flexibility. Specifically, a magnetic angular sensing system has a magnet magnetized radially and a magnetic angular sensor for sensing the angular position of the magnet. The magnetic angular sensor is mounted in parallel to the axis of the magnet and is non-coplanar with the magnet. The magnetic angular sensor senses an angular position of the magnet on the basis of a detected axial magnetic field component and a tangential magnetic field component of the magnetic field vector where the sensor is mounted.

### Prior Art Publications

### Patent Publications

Patent Document 1: JPH11-107129A
Patent Document 2: JPH11-117147A
Patent Document 3: JP2007-500804A
Patent Document 4: JP2012-217298A
Patent Document 5: US2017/74680A

### Disclosure of the Invention

### Problem to be Solved by the Invention

However, the above-described conventional rotary drive devices (namely, the direct-electromagnetic-drive-type rotary selvedge drive apparatus for a loom), the loom, and their control systems (detection systems) have the following problems.

First, since the rotor is supported by a dedicated rolling bearing configured to have a large diameter as a metal part, some parts (e.g., the outer race of a rolling bearing) which rotate together with the rotor have increased sizes and weights. Accordingly, there is a limit from the viewpoint of reducing the moment of inertia by reducing the weight of the rotor, thereby securing sufficiently high-speed response. Also, the increased sizes and weights are disadvantageous from the viewpoint of cost saving and energy saving. There has been room for further improvement in terms of solving these problems.

Secondary, employment of a structure in which a structural element such as a leno weaving disc or a magnet is disposed on the outer circumferential surface or side surface of the rolling bearing results in a complicated overall structure, and use of a large rolling bearing results in an increase in the thickness of the entire apparatus. As a result, it is impossible to meet the demand for installation in a narrow space with a spacing of about 10 mm. Thus, there has been room for further improvement in terms of increasing versatility.

Third, in the case where a rotary drive device is used in a loom as disclosed in Patent Document 3, it is necessary to dispose two (large and small) rotational drive devices are arranged side by side in the feed direction of selvedge threads, the degree of complexness and size of the entire loom increase. In addition, assembly becomes complicated, for example, adjustment of the positions of the rotary drive devices in relation to each other becomes necessary. As a result, manufacturability is poor, and the cost of the entire loom increases.

Fourth, from the viewpoint of decreasing the size and weight of a rotary drive device of this type, the configuration of a control system, including a detection system, for the rotation state is also an important element. Namely, three signals (an A-phase signal, a B-phase signal, and an origin signal) for detecting the rotational speed, the rotation direction, and the origin become necessary. However, in the case where a separate rotation detector, such an encoder unit, for detecting these is attached, or the case where a sensor-less motor in which the main body of a rotary drive device and sensors are integrated is configured, a sufficient degree of consideration is not devoted from the viewpoint of realizing a decrease in thickness of the rotary drive device. Also, a large bearing becomes necessary. Thus, the thickness (width dimension) of the rotary drive device in the axial direction tends to increase. As a result, there has been room for further improvement in terms of further reducing the size (thickness), wight, and cost.

An object of the present invention is to provide a rotary drive device which has solved the problems present in the background art.

### Means for Solving the Problem

In order to solve the above-described problems, a rotary drive device 1 according to the present invention comprises a stationary body portion Mc which includes a stator 2 having a plurality of stator core portions 2c integrally provided and stator coils 3 wound around the stator core portions 2c, and a movable body portion Mm which includes a rotor magnet 4 having a plurality of magnetic poles facing the stationary body portion Mc and a rotor yoke 5 attached to the rotor magnet 4, the rotary drive device being characterized by comprising:
the movable body portion Mm which includes the rotor yoke 5 formed into a ring shape and the rotor magnet 4 having a plurality of magnetic poles disposed along a circumferential direction Ff of the rotor yoke 5;
the stationary body portion Mc in which a plurality of stator core portions 2c facing the movable body portion Mm are provided on the stator 2 formed into a ring shape such that the stator core portions 2c are disposed at predetermined intervals along the circumferential direction Ff; and
a movable body detection portion Md including an encoder sensor 7e which is disposed in at least one accommodation space Sc formed in the stator 2 by removing some of the stator core portions 2c and which detects at least the rotational speed R of the movable body portion Mm.

In preferred modes of the invention, the movable body detection portion Md may include, in addition to the encoder sensor 7e, an origin sensor 7x for detecting an origin position Xo of the movable body portion Mm. In addition, the accommodation spaces Sc may be provided such that the number of the accommodation spaces Sc becomes equal to a multiple of the number of phases of drive currents for driving the stator coils 3. Notably, the stator 2 may include a movable body support portion Ms which includes a plurality of support rollers 6 which are disposed in the accommodation spaces Sc and rotatably support the movable body portion Mm by their roller circumferential surfaces 6f in contact with the movable body portion Mm. Meanwhile, the movable body detection portion Md may include a reflection-type optical sensor portion Ds for detecting a to-be-detected portion 8 provided on the circumferential surface Mmf of the movable body portion Mm, and a to-be-detected portion 8 having a to-be-detected pattern 8p formed by combining reflection portions 8pc and non-reflection portions 8pn detected by the reflection-type optical sensor portion Ds may be provided on the circumferential surface Mmf of the movable body portion Mm. In this case, a rail groove 9 having a concave cross section and guiding the support rollers 6 may be provided on the circumferential surface Mmf of the movable body portion Mm, and the to-be-detected portion 8 (8p, 8x) may be provided at each of positions on opposite sides of the rail groove 9. Therefore, the encoder sensor 7e can detect the to-be-detected pattern 8p by a plurality of sensor portions, and an A-phase signal (Sa) and a B-phase signal (Sb) can be detected by setting the phase difference between detection signals Sa and Sb obtained from the plurality of sensor portions to 90°. The movable body detection portion Md may include a magnetic sensor portion Dm for detecting the magnetic poles of the rotor magnet 4 provided in the movable body portion Mm. In this case, the magnetic sensor portion Dm may include one, two, or more elements which can detect magnetic pole changes in the circumferential direction Ff of the rotor magnet 4, the elements being chosen from a Hall element 7h, a magnetoresistive element, and a detection coil 7c, and the magnetic sensor portion Dm may be constituted by a single chip including a plurality of sensor portions and generate an A-phase signal and a B-phase signal by using detection signals Sa and Sb obtained from the sensor portions.

### Effects of the Invention

The rotary drive device 1 according to the present invention, which has the configuration as described above, yields the following remarkable effects.
(1) The movable body portion Mm includes the rotor yoke 5 formed into a ring shape and the ring-shaped rotor magnet 4 having a plurality of magnetic poles disposed along the circumferential direction Ff of an outer circumferential portion of the rotor yoke 5. Therefore, a conventionally used large rolling bearing for rotation of the movable body portion Mm can be eliminated. As a result, it is possible to greatly reduce the weight of the movable body portion Mm and further reduce the moment of inertia while coping with high torque. Thus, sufficient high-speed response of the rotary drive device 1 can be ensured, and the cost and energy saving performance can be further improved.
(2) The rotary drive device 1 includes the stationary body portion Mc in which the plurality of stator core portions 2c facing an outer circumferential portion of the movable body portion Mm are disposed on an inner circumferential portion of the ring-shaped stator 2 at predetermined intervals along the circumferential direction Ff; and the movable body support portion Ms composed of the plurality of support rollers 6 which rotatably support the movable body portion Mm by their roller circumferential surfaces 6f in contact with an outer circumferential portion or an inner circumferential portion of the movable body portion Mm. Therefore, the entire structure can be simplified, and, in particular, it is possible to realize reduction of the overall thickness of the apparatus. As a result, it is possible to provide the rotary drive device 1 which is excellent in versatility and expandability; for example, which can sufficiently meet the demand of disposing the rotary drive device 1 in a narrow space or the like where the spacing is about 10 mm or less.
(3) Since the rotary drive device 1 can be configured such that its overall thickness in the axial direction is smaller as compared with its overall length in the radial direction, even in the case where the rotary drive device 1 is used in a loom including a center selvedge drive apparatus configured by combining two rotary drive devices 1, identical rotary drive devices can be disposed such that they overlap each other in the axial direction. Accordingly, the entire loom can be downsized and simplified, and adjustment of the relative position between the rotary drive devices 1, or the like is unnecessary or can be performed very easily. In addition, it is excellent in cost saving and manufacturability (e.g., assembly becomes easy).
(4) There is provided the movable body detection portion Md including the encoder sensor 7e which is disposed in at least one accommodation space Sc formed in the stator 2 by removing some of the stator core portions 2c and which detects at least the rotational speed R of the movable body portion Mm. Therefore, the sensors such as the encoder sensor 7e can be disposed within a so-called occupied space (the space occupied by the stator 2), and it is unnecessary to secure a separate disposing space. Thus, it is possible to realize reduction of the size (thickness) and the weight and cost reduction. In addition, a sensor-less motor in which the main body of the rotary drive device and the sensors are integrated can be easily constructed.
(5) In a preferred mode in which, in addition to the encoder sensor 7e, an origin sensor 7x for detecting the origin position Xo of the movable body portion Mm is contained in the movable body detection portion Md, it becomes possible to completely detect the rotation state of the movable body portion Mm by using the three signals (the A-phase signal, the B phase-signal, and the origin signal) for detecting the rotational speed (the rotation direction) and the origin. Therefore, it becomes unnecessary to attach a separate rotation detector (an encoder or the like), which contributes further reduction of the size (reduction of the thickness).
(6) In a preferred mode in which the accommodation spaces Sc are provided such that the number of the accommodation spaces Sc becomes equal to a multiple of the number of phases of drive currents for driving the stator coils 3, it becomes possible to dispose various types of sensors of the detection system. Therefore, the rotary drive device 1 can be implemented in the most preferable mode without greatly affecting the original characteristics (performance) of the rotary drive device 1.
(7) In a preferred mode in which the stator 2 includes the movable body support portion Ms including a plurality of support rollers 6 which are disposed in the accommodation spaces Sc and rotatably support the movable body portion Mm by their roller circumferential surfaces 6f in contact with the movable body portion Mm, general purpose components such as ball bearings which are small and light and have various variations can be used as the support rollers 6. Therefore, the intended rotary drive device 1 having a higher performance can be obtained easily at low cost.
(8) In a preferred mode in which the reflection-type optical sensor portion Ds for detecting the to-be-detected portion 8 provided on the circumferential surface Mmf of the movable body portion Mm is provided in the movable body detection portion Md, the rotational speed, etc. of the movable body portion Mm can be detected easily and reliably by detecting the to-be-detected portion 8 (the to-be-detected pattern 8p) provided on the circumferential surface Mmf of the movable body portion Mm by the reflection-type optical sensor portion Ds.
(9) In a preferred mode in which the to-be-detected portion 8 having the to-be-detected pattern 8p formed by combining the reflection portions 8pc and the non-reflection portions 8pn detected by the reflection-type optical sensor portion Ds is provided on the circumferential surface Mmf of the movable body portion Mm, since, unlike the case of a surface having recesses and protrusions, the to-be-detected portion 8 can be formed by providing colors (e.g., white, black, etc.), which contributes to facilitation of implementation and cost saving.
(10) In a preferred mode in which the rail groove 9 having a concave cross section and guiding the support rollers 6 is provided on the circumferential surface Mmf of the movable body portion Mm, and the to-be-detected portions 8 (8p, 8x) are provided at positions on opposite sides of the rail groove 9, it is possible to provide the rail groove 9 on the circumferential surface Mmf of the movable body portion Mm and is also possible to use it for the to-be-detected portions 8 (8p, 8x); i.e., it is possible to use the circumferential surface Mmf of the movable body portion Mm for many functions and many purposes.
(11) In a preferred mode in which the encoder sensor 7e is configured to detect the to-be-detected pattern 8p by a plurality of sensor portions, and the A-phase signal (Sa) and the B-phase signal (Sb) are detected by setting the phase difference between the detection signals Sa and Sb obtained from the plurality of sensor portions to 90°, the rotational speed and the rotation direction of the movable body portion Mm can be detected by detecting the single to-be-detected pattern 8p by the plurality of sensor portions. Accordingly, in the case where the encoder sensor 7e is configured as a detection unit in which a plurality of sensor portions are integrated, the encoder sensor 7e can be incorporated as a single sensor substantially, which contributes to further reduction of the size and the cost.
(12) In a preferred mode in which the movable body detection portion Md includes the magnetic sensor portion Dm for detecting the magnetic poles of the rotor magnet 4 provided in the movable body portion Mm, since magnetic pole changes in the circumferential direction Ff of the rotor magnet 4 can be detected directly by the magnetic sensor portion Dm, there is an advantage of eliminating the necessity of providing at least a portion of a separate to-be detected portion 8. In addition, it becomes possible to selectively use the sensors in accordance with the version, etc. of the rotary drive device 1, if necessary, which contributes to enhancement of the degree of freedom in design.
(13) In a preferred mode in which the magnetic sensor portion Dm includes one, two, or more elements which can detect magnetic pole changes in the circumferential direction Ff of the rotor magnet 4, the elements being chosen from a Hall element 7h, a magnetoresistive element, and a detection coil 7c, since the various types of sensors serving as the magnetic sensor portion Dm can be selectively used, it is possible to increase the degree of freedom in designing the detection system in which detection is performed by the magnetic sensor portion Dm and to easily optimize the detection system.
(14) In a preferred mode in which the magnetic sensor portion Dm is constituted by a single chip including a plurality of sensor portions, and an A-phase signal and a B-phase signal are generated by using detection signals Sa and Sb obtained from the sensor portions, more accurate acceleration/deceleration control and more accurate speed control become possible, useless power consumption can be reduced, and it is possible to contribute to further reduction of the size and thickness of the rotary drive device 1, power saving, and improvement of controllability.

### Brief Description of the Drawings

[FIG. 1] Vertically sectioned side view showing a sensor board portion and a to-be-detected portion of a rotary drive device according to a preferred embodiment of the present invention, including an enlarged view of an extracted portion of the rotary drive device.
[FIG. 2] Front view of the rotary drive device whose cover portion is removed, including an enlarged sectional view of an extracted portion of the rotary drive device.
[FIG. 3] Vertically sectioned side view of the rotary drive device, including an enlarged view of an extracted portion of the rotary drive device.
[FIG. 4] Principle-showing configurational diagram including a cooling function added to the rotary drive device.
[FIG. 5] Diagram used for describing the principle of detection performed using a reflection-type optical sensor portion and a to-be-detected portion of the rotary drive device.
[FIG. 6] Time chart showing the waveforms of detection signals obtained from the reflection-type optical sensor portion of the rotary drive device.
[FIG. 7] Layout drawing of a magnetic sensor portion according to a modification of the rotary drive device as viewed from its front.
[FIG. 8] Layout drawing of the magnetic sensor portion according to the modification as viewed from its side.
[FIG. 9] Diagram used for describing the detection principle of a detection system configured by the magnetic sensor portion according to the modification.
[FIG. 10] Front view of a center selvedge drive apparatus in a direct-electromagnetic-drive-type rotary selvedge system for a loom, showing an example of use of the rotary drive device.
[FIG. 11] Side view of the center selvedge drive apparatus.
[FIG. 12] Time chart showing changes of rotational speed in the center selvedge drive apparatus.

### Description of Reference Numerals

1: rotary drive device, 2: stator, 2c: stator core portion, 3: stator coil, 4: rotor magnet, 5: rotor yoke, 6: support roller, 6f: roller circumferential surface, 7x: origin sensor, 7h: Hall element, 7c: detection coil, 8 (8p, 8x): to-be-detected portion, 8p: to-be-detected pattern, 8pc: reflection portion, 8pn: non-reflection portion, 9: rail groove, Mc: stationary body portion, Mm: movable body portion, Mmf: circumferential surface of movable body portion, Md: movable body detection portion, Ms: movable body support portion, Ds: reflection-type optical sensor portion, Dm: magnetic sensor portion, Ff: circumferential direction, Sc: accommodation space, Sa: detection signal, Sb: detection signal, R: rotational speed, Xo: origin position

### Best Mode for Carrying Out the Invention

Next, the best embodiment according to the present invention will be described in detail based on the drawings.

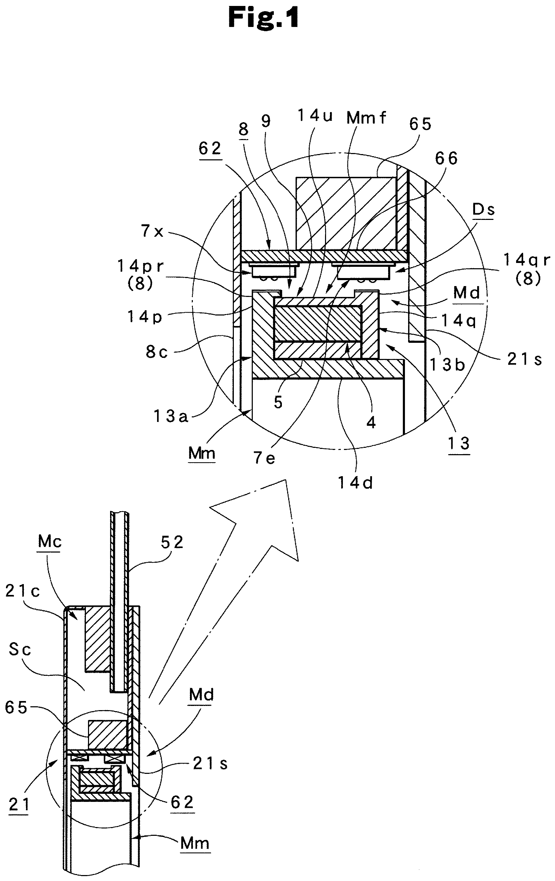

First, the structure of a main part, including the overall structure of a rotary drive device 1 according to the present embodiment, will be described specifically with reference to FIGS. 1 to 6.

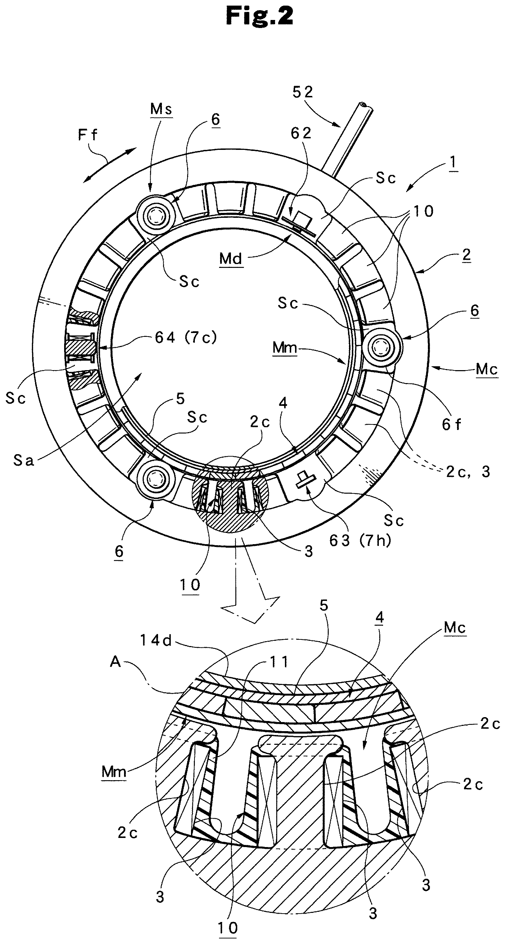

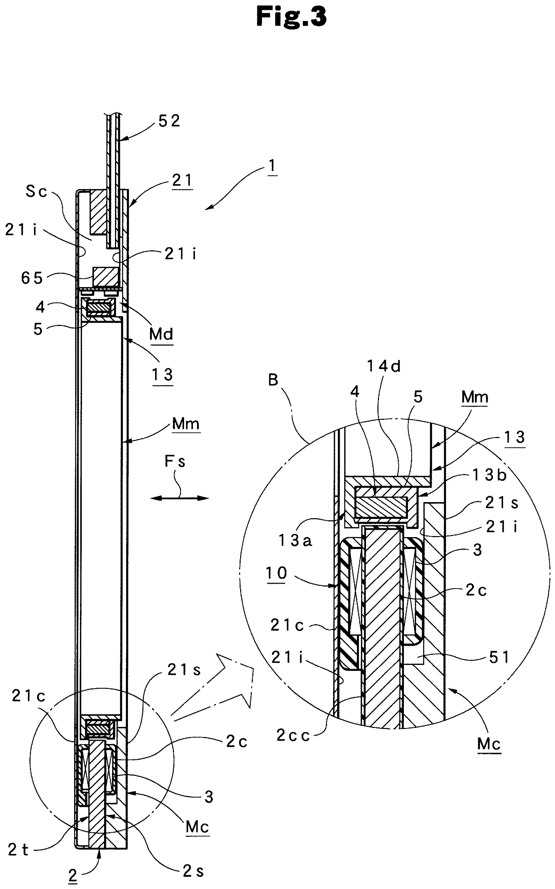

FIGS. 2 and 3 show the overall structure of a mechanism portion of the rotary drive device 1. The rotary drive device 1 is mainly composed of a stationary body portion Mc, a movable body portion Mm, a movable body support portion Ms, and a movable body detection portion Md.

The stationary body portion Mc includes a stator 2 shown in FIG. 2 and integrally formed such that its entirety has a ring shape. A stack obtained by stacking a plurality of non-oriented magnetic steel sheets, such as silicon steel sheets, can be used for the stator 2. When such a stator 2 is used, eddy current loss can be effectively reduced. In this case, non-oriented magnetic steel sheets have slight magnetic directional properties depending on manufacturing conditions such as the rolling direction. Therefore, when the stack is manufactured, a rotational stacking method is employed, whereby the magnetic directional properties can be eliminated. That is, in the case of a three-phase motor, the stator 2 has stator core portions 2c and accommodation spaces Sc, which will be described later, in accordance with its 120° rotational symmetric shape. Therefore, when the magnetic steel sheets are stacked, displacements of 120° and 240° are given. Notably, in this case, one rotational stacking mark (a small cutout or the like) is provided in an outer circumferential portion of the stator 2 so as to enable visually checking whether or not the magnetic steel sheets are rotated and stacked (rotational stacking is performed) without fail. Also, it is desirable to perform magnetic annealing of the stator 2, in which the magnetic steel sheets are stacked and fixed together by means of crimping or the like, in order to remove strain generated as a result of processing.

As shown in an enlarged sectional view of an extracted portion indicated by a dot-dash line circle A of FIG. 2, the stator 2 has a plurality of integrally formed stator core portions 2c at an inner circumferential portion. The stator core portions 2c are disposed at predetermined intervals along a circumferential direction Ff and have a T-like shape such that the stator core portions 2c project toward the center. The width of each stator core portion 2c in an axial direction Fs is desirably chosen such that the width is about 0.8 time or less of the width in the axial direction Fs of a rotor magnet 4, which will be described later. In the case where the width of each stator core portion 2c is chosen in this manner, since the magnetic attraction forces between rotor magnet 4 and the stator core portions 2c can be made uniform, the movable body portion Mm, which will be described later, can be stably held at the magnetic center position.

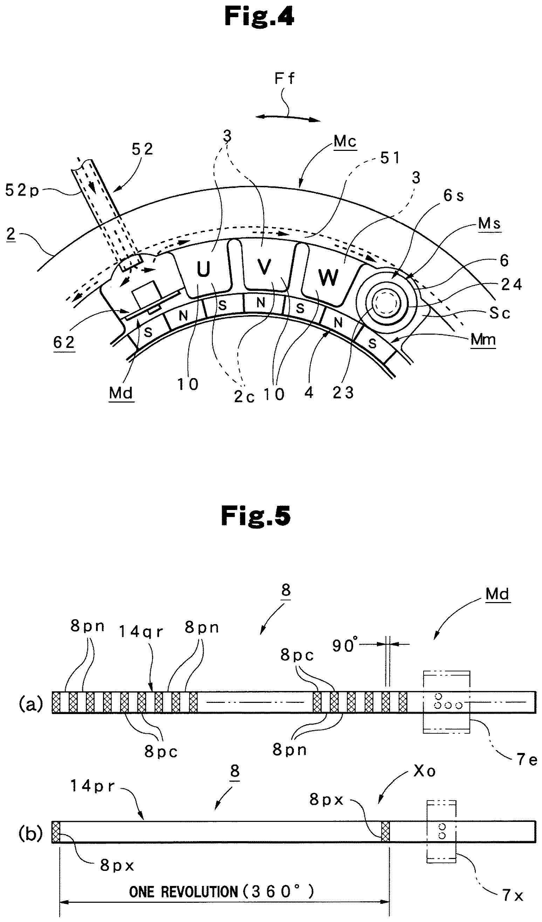

Each stator core portion 2c faces an outer circumferential portion of the movable body portion Mm through a small gap. In the exemplary case, when the spacing between the stator core portions 2c is set to a constant spacing, the pitch (spacing) is chosen such that the number of poles of the stator core portions 2c becomes 24. A disposing pattern in which three successive stator core portions 2c are left and a next stator core portion 2c is removed so as to form an accommodation space Sc is provided repeatedly. Thus, the number of the poles of the stator core portions 2c is set to 18, and six accommodation spaces Sc are provided at fixed intervals in the circumferential direction Ff. Three stator core portions 2c are present between adjacent accommodation spaces Sc, and the stator core portions 2c have magnetic poles of three phases (U-phase, V-phase, and W-phase). Therefore, rotation of the rotary drive device 1 can be controlled as a three-phase brushless motor by pulse width modulation drive control (PWM drive control) (see FIG. 4).

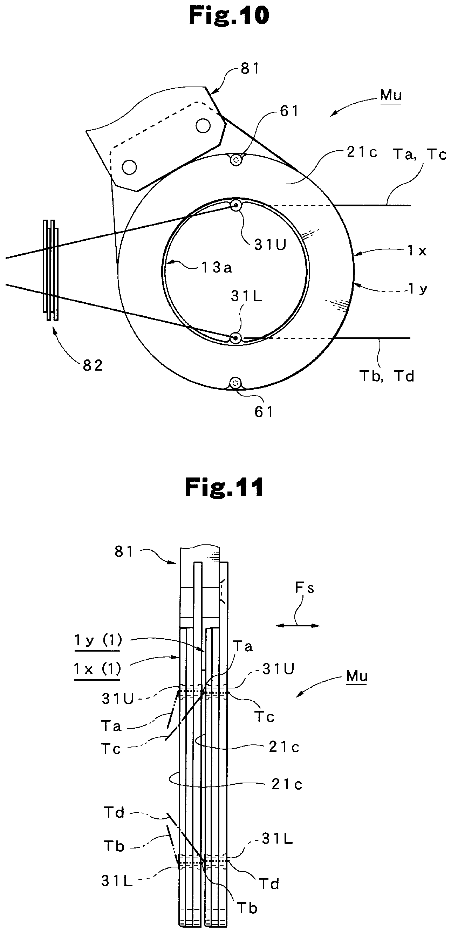

In particular, in the case where two rotary drive devices 1 (1x) and 1 (1y) are disposed in parallel to overlap each other as in a center selvedge drive apparatus in a direct-electromagnetic-drive-type rotary selvedge system for a loom (see FIG. 11), in order to reduce crosstalk between the rotary drive devices 1x and 1y due to electromagnetic noise, they are desirably formed of a soft magnetic iron material, which will be described later. In the case where the two rotary drive devices 1x and 1y disposed side by side are controlled by PWM drive control, it is possible to prevent erroneous operations by means of shield against generated high-frequency electromagnetic noise (crosstalk).

As shown in FIG. 3, a coating material 2cc (epoxy resin, polyimide resin, or the like) is applied, as an insulating coating, by means of electrodeposition painting, on at least winding parts of the stator core portions 2c of the stator 2 such that the layer thickness becomes several tens to several hundreds of microns. A stator coil 3 formed by winding a coil wire (magnet wire) composed of a conductor with insulating coating is attached to each stator core portion 2c. In general, polyurethane resin, polyester resin, or the like is applied, as a coating material, to the outer circumference of a copper wire such that an insulating coating of about several tens of microns is formed, whereby formation of a short circuit is prevented.

Meanwhile, a ring-shaped base portion 21s is provided on one end face 2s (back side) of the stationary body portion Mc. Desirably, the base portion 21s is integrally formed of aluminum material which is high in thermal conductivity (heat dissipation) and is non-magnetic. As shown in FIG. 3, the base portion 21s is superimposed on the one end face 2s of the stator 2 and fixed with an unillustrated fixing screw, whereby the stator 2 is supported. The movable body support portion Ms, which will be described later, is disposed on the inner side of this base portion 21s.

In the case where, as described above, the ring-shaped base portion 21s which supports the one end face 2s of the stator 2 and on which the movable body support portion Ms is disposed is provided on the stationary body portion Mc, since this base portion 21s can be caused to function as a part of the mechanical structural elements of the stationary body portion Mc, it can be used as, for example, a housing function portion for disposing not only the support rollers 6, which will be described later, but also a circuit board, etc., and an attachment function portion used when the rotary drive device 1 is installed.

Also, on the other end face 2t (front side), a cover portion 21c for covering the other end face of the stationary body portion Mc is disposed. This cover portion 21c is formed of aluminum material which is high in thermal conductivity (heat dissipation) and is non-magnetic. Notably, in the case where two rotary drive devices 1 are disposed side by side in the axial direction Fs as in a center selvedge drive apparatus in an automatic loom, in order to reduce crosstalk between the rotary drive devices 1 due to electromagnetic noise, the cover portion 21c is desirably formed of a soft magnetic iron material. In the case where such a cover portion 21c is attached, even when the rotary drive device is used in a place where dust is likely to be generated, for example, an automatic loom, etc., dust generated from yarn waste or the like can be prevented from entering the inside of the rotary drive device 1 from the cover portion 21c side. This contributes to improvement of the reliability and durability of the rotary drive device 1.

The base portion 21s and the cover portion 21c are fixed together by fixing screws 61 (see FIG. 10), whereby an integrated housing portion 21 is formed. The housing portion 21 also serves as a casing of the rotary drive device 1, and the outer surface of the base portion 21s and the outer surface of the cover portion 21c face toward the outside; that is, they are located at the outermost part of the rotary drive device 1.

By the way, the coating material 2cc of the stator core portions 2c and the coating material of the stator coils 3, which have been described above, have low heat conductivities of about 0.2 [W/(m·K)] in order to prevent lowering of their electrical resistances due to impurities. Therefore, when heat is generated due to energization, there arises a problem of necessity of dissipating the generated heat.

In order to solve this problem, as shown in FIG. 2, a heat dissipating mold portion 10 is provided. In the heat dissipating mold portion 10, at least a portion (desirably, the entirety) of the stator coil 3 wound around each stator core portion 2c is coated with an insulating coating material 11 having heat conductivity, the insulating coating material 11 is placed in contact with at least a portion of the stator core portion 2c, and the insulating coating material 11 is placed in contact with or in close proximity to an inner surface 21i of the housing portion 21, which faces toward the outside.

The insulating coating material 11 is desirably any one of various resin materials such as modified silicon resin materials and modified epoxy resin materials, in particular, a resin material in which alumina or a metal is dispersed for the purpose of heat dissipation. Thus, heat conductivity can be dramatically improved. For example, in the case of a resin material in which alumina is dispersed, the heat conductivity can be increased by about an order of magnitude. The coating with the insulating coating material 11 can be performed by insert molding by injection molding, an application process, or the like.

The enlarged sectional view of the extracted portion indicated by the dot-dash line circle A of FIG. 2 shows the heat dissipating mold portion 10 which covers the circumferential surface of the stator coil 3 wound around each stator core portion 2c and the inner surface of the stator 2. In the exemplary case, the heat dissipating mold portion 10 has a layer thickness of about 1 mm. Notably, the heat dissipating mold portion 10 shown in FIG. 2 shows an example, in which each stator coil 3 is individually coated with the insulating coating material 11. However, it is possible to coat a plurality of (for example, three) coils 3 as a unit. In this case, the gap between the coils 3 is filled with the insulating coating material 11. As described above, the insulating coating material 11 can be applied to the stator coils 3 on a coil by coil basis (i.e., each coil 3 forms one unit) or on a coil-group by coil-group basis (i.e., a plurality of coils 3 form one unit), and the coating method can be chosen in accordance with the overall number, size, shape, etc. of the stator coils 3. As a result, the degree of freedom in designing the rotary drive device 1 can be increased, and the heat dissipation effect can be optimized.

A material whose heat conductivity is higher than the heat conductivities of the coating material 2cc of the stator core portions 2c and the coating material of the stator coils 3 is desirably used for the insulating coating material 11. Since this enables efficient transfer of heat generated in the stator coils 3 to the insulating coating material 11, an effective heat dissipation effect can be ensured.

Furthermore, as shown in an enlarged view of an extracted portion indicated by a dot-dash line circle B of FIG. 3, the insulating coating material 11 of the heat dissipating mold portion 10 is brought into contact with or into close proximity to the inner surface 21i of the housing portion 21, which faces toward the outside. The configurational example of FIG. 3 shows the case where the insulating coating material 11 is brought into contact with the inner surface 21i of the base portion 21s and into contact with the inner surface 21i of the cover portion 21c. Notably, although the mode in which the insulating coating material 11 is brought into contact with the inner surfaces 21i as described above is desired, it may not be an absolute condition, but a mode in which the insulating coating material 11 is brought into close proximity to the inner surfaces 21i with small gaps provided as necessary may be employed. In this case, the gaps desirably have a size of 0.5 mm or less.

Therefore, the base portion 21s and the cover portion 21c which constitute the housing portion 21 are formed of a material whose heat conductivity is higher than the heat conductivity of the insulating coating material 11. In the exemplary case, an aluminum material which is high in heat dissipating performance (heat conductivity) is used for both the base portion 21s and the cover portion 21c. Since such a material condition enables the internal heat transferred to the insulating coating material 11 to be reliably dissipated into the atmosphere, an effective and efficient cooling effect can be secured.

In addition, in the present embodiment, as shown in FIGS. 3 and 4, the above-described housing portion 21 is formed to have a shape for covering at least a portion of the stator 2 via an air flow space 51. In this case, since the housing portion 21 is configured by combining the base portion 21s and the cover portion 21c, as shown in FIG. 3, the air flow space 51 along the circumferential direction can be formed, for example, by changing the shape of the base portion 21s (the cover portion 21c). Since the air flow space 51 can be easily secured by, for example, changing the shape of the housing portion 21 itself as described above, an effective cooling function using this air flow space 51 can be provided.

FIG. 3 shows an air feed means 52 added to the housing portion 21 so as to feed air to the air flow space 51. The air feed means 52 can feed air from an external blower to the air flow space 51 through a blower tube 52p (see FIG. 4). Since an air-cooling function can be easily provided by the air flow space 51 and the air feed means 52 as described above, an effective cooling function can be secured. Broken line arrows in FIG. 4 show air feed paths. Notably, a discharge port for discharging air from the air flow space 51 can be provided at a position diametrically opposite the blower tube 52p.

The movable body portion Mm includes a rotor yoke 5 formed into a ring shape, and a ring-shaped rotor magnet 4 having a plurality of magnetic poles disposed along the circumferential direction Ff of an outer circumferential portion of the rotor yoke 5.

In this case, as shown in FIG. 4, a ring-shaped one piece magnet having 32 poles formed by split magnetization along the circumferential direction Ff is used as the rotor magnet 4. Since use of such a rotor magnet 4 eliminates the necessity of an operation of combining a plurality of individual magnets, it becomes possible to facilitate the assembly, realize homogeneity, increase the strength, and lower the cost. In particular, since the thickness of the rotor magnet 4 can be reduced, the weight of the movable body portion Mm can be reduced, which contributes to further reduction of the moment of inertia.

The rotor yoke 5 is integrally formed into a ring shape as a whole by using a soft magnetic material such as iron. In this case, the rotor yoke 5 is formed to be thinner than the rotor magnet 4. When the rotor yoke 5 is formed in this manner, together with reduction of the thickness of the rotor magnet 4, it becomes possible to reduce the weight while avoiding saturation of a magnetic circuit by split magnetization of the plurality of poles. In particular, since the rotor yoke 5 and the rotor magnet 4 having large specific gravities can be reduced in weight and minimized in size, the above-described configuration can be implemented as the most preferred mode for configuring the movable body portion Mm. The rotor magnet 4 can be attached such that an inner circumferential portion of the rotor magnet 4 comes into contact with an outer circumferential portion of the rotor yoke 5.

The movable body portion Mm includes a rotor holding portion 13 (shown in FIG. 1) for holding the rotor magnet 4 and the rotor yoke 5. The rotor holding portion 13 in the example is configured by combining an inner ring portion 13a and an outer ring portion 13b. Each of the ring portions 13a and 13b is integrally formed into a ring shape by using a lubricating synthetic resin which is small in the moment of inertia and wear load and has excellent wear resistance. Notably, as the lubricating synthetic resin, fluororesin, cast nylon resin, ultra-high molecular weight polyethylene resin, polyacetal resin, etc. can be used. In addition, in the case where each of the ring portions 13a and 13b is formed by using a non-magnetic metal with a small specific gravity, such as a magnesium alloy, instead of the lubricating synthetic resin, since a moment of inertia close to that of the resin material can be obtained, the advantage of vibration absorption which is inherent to the magnesium alloy can be obtained.

In the case where the entirety of the rotor holding portion 13 (the inner ring portion 13a and the outer ring portion 13b) is formed by using a lubricating synthetic resin, since the physical properties of the lubricating synthetic resin can be utilized, it is possible to realize smooth rotation (movement) of the movable body portion Mm and effectively absorb vibration and noise during rotational operation (when moving). Notably, in the exemplary case, all (the entirety) of the rotor holding portion 13 is integrally formed by using a lubricating synthetic resin. However, it is possible to form a portion of the rotor holding portion 13 by using a lubricating synthetic resin and form the remaining portion by using a different material (non-magnetic metal material or the like).

As shown in FIG. 1, the inner ring portion 13a is composed of a ring main body portion 14d which holds the inner circumferential surface of the rotor yoke 5, and a ring-shaped side portion 14p which is integrally formed at an edge of the ring main body portion 14d on one side in the axial direction Fs and holds end faces of the rotor magnet 4 and the rotor yoke 5 on one side (the front side). The outer ring portion 13b is composed of a ring-shaped ring main body portion 14u which holds the outer circumferential surface of the rotor magnet 4, and a ring-shaped side portion 14q which is integrally formed at an edge of the ring main body portion 14u on the other side in the axial direction Fs and holds end faces of the rotor magnet 4 and the rotor yoke 5 on the other side (the back side).

Furthermore, upward protruding rail portions 14pr and 14qr are integrally formed at the positions of the upper ends of the respective side portions 14p and 14q, and a rail groove 9 having a concave cross section is formed by these rail portions 14pr and 14qr and the upper surface of the ring main body 14u. As a result, the support rollers 6, which will be described later, can be engaged with (guided by) the rail groove 9. Notably, in the case of the embodiment, thread guides 31U and 31L are provided on the inner circumferential surface of the rotor holding portion 13 at diametrically opposite positions (see FIG. 10).

In the case where the rail groove 9 is provided when the movable body portion Mm is formed, stability and reliability can be enhanced. Namely, although relative displacements of the movable body portion Mm in the axial direction Fs in relation to the stationary body portion Mc are restrained by magnetic forces, when a mechanical displacement occurs due to the effect of disturbance or the like, the mechanical displacement is restrained by the rail portions 14pr and 14qr. Thus, so-called coming off of the movable body portion Mm from the stationary body portion Mc can be avoided, whereby stability and reliability can be enhanced.

Meanwhile, the movable body support portion Ms is composed of three support rollers 6 whose positions are fixed in relation to the stator 2. In this case, as shown in FIG. 2, roller support shaft portions 6s which rotatably support the support rollers 6 at their centers are attached to the base portion 21s, and their positions are chosen such that the support rollers 6 can be accommodated in the above-described three accommodation spaces Sc located at 120° intervals in the circumferential direction Ff. Furthermore, the outer diameter, etc. of the support rollers 6 are chosen such that roller circumferential surfaces 6f of the support rollers 6 come into contact with an outer circumferential portion of the movable body portion Mm.

Notably, since the three support rollers 6 have a function of rotatably supporting the movable body portion Mm by bringing the respective roller circumferential surfaces 6f into contact with the outer circumferential portion of the above-described movable body portion Mm, in general, the movable body support portion Ms can be composed of a plurality of (three or more) support rollers 6 in consideration of the number of the stator core portions 2c, etc. In the case where the support rollers 6 are disposed at four or more locations, they are disposed, while the support rollers 6 at the minimum number of (three) locations are used as a reference, such that a slight gap (about several tens of microns) is formed between the support rollers 6 and the movable body portion Mm. As a result, assembly becomes easy. In addition, in the case where the support rollers 6 are disposed in consideration of the direction of gravity and/or the direction in which the magnitude of vibration is large in the main body of an apparatus, such as a loom, to which the rotary drive devices 1 are attached, more stable rotating operation can be obtained.

A radial bearing, such as a ball bearing or a roller bearing, is used for each of the support rollers 6. In the case where radial bearings are used for the support rollers 6, general purpose components such as ball bearings which are small and light and have various variations can be used. Therefore, the intended rotary drive device 1 having a higher performance can be obtained easily at low cost. Notably, although it is desired to use radial bearings for the support rollers 6, in the case where they are formed of a soft magnetic material, a non-magnetic resin sleeve formed of a resin material having good sliding properties, such as ultra-high molecular weight polyethylene or polyacetal, are fixed to the outer circumferences of the radial bearings, whereby generation of cogging due to the magnetic attraction force generated for the rotor magnet 4 can be reduced. In this case, the magnetic gaps between the rotor magnet 4 and the radial bearings are desirably set to be greater than the magnetic gaps between the rotor magnet 4 and the stator cores 2c.

In order to further reduce cogging, the radial bearings may be formed of a ceramic material, or the support rollers 6 may be formed of only the above-described resin sleeves. In this case, the radial bearings are omitted. As a result, even in the case where the rotor magnet 4 is formed by bonding together sintered anisotropic neodymium magnets which generates strong magnetic forces, cogging caused by the support rollers 6 can be eliminated almost completely.

The support rollers 6 are attached to the base portion 21s as follows. Each roller shaft portion 6s is composed of an attachment screw 23 and a collar 24. The collar 24 is inserted into an inner hole of the support roller 6, and the attachment screw 23 is inserted into the collar 24 such that the attachment screw 23 passes therethrough, whereby the attachment screw 23 can be screwed into a screw hole formed in the base portion 21s.

In the case where, as described above, the stator 2 has the movable body support portion Ms composed of the plurality of support rollers 6 whose positions are fixed in relation to the stator 2 and which rotatably support the movable body portion Mm by bringing their roller circumferential surfaces 6f into contact with the movable body portion Mm, general purpose components such as ball bearings which are small and light and have various variations can be used for the support rollers 6. Therefore, the intended rotary drive device 1 having a higher performance can be obtained easily at low cost.

In the case where the support rollers 6 are disposed in the accommodation spaces Sc formed by removing some of the stator core portions 2c, since the support rollers 6 can be disposed at the same axial position as the stator core portions 2c, it is possible to avoid unnecessary protrusions of the support rollers 6 in the radial direction and the axial direction Fs, thereby realizing reasonable reduction of the thickness of the movable body portion Mm, and thus, reasonable reduction of the thickness of the rotary drive device 1. The accommodation spaces Sc are desirably provided such that the number of the accommodation spaces Sc becomes equal to a multiple of the number of phases of drive currents for driving the stator coils 3. In the case where the number of the accommodation spaces Sc is equal to the multiple of the number of phases, it becomes possible to dispose various types of sensors of the detection system. Therefore, the rotary drive device 1 can be implemented in the most preferred mode without greatly affecting the original characteristics (performance) of the rotary drive device 1.

Notably, of the six accommodation spaces Sc, three accommodation spaces Sc are used as the accommodation spaces Sc for the support rollers 6, and the remaining three accommodation spaces Sc are used as the accommodation spaces Sc for the detection system. Namely, according to the present invention, the following basic configuration is employed. An encoder sensor 7e for detecting at least the rotational speed R of the movable body portion Mm is disposed at least one accommodation space Sc, which is formed in the stator 2 by removing some of the stator core portions 2c. The detection system configured as described above serves as the movable body detection portion Md. FIG. 2 shows an example in which a sensor board portion 62 and magnetic sensors 63 and 64 are disposed. Notably, the magnetic sensor 63 shows an example in which a Hall element 7h is used as an origin sensor which detects a magnet provided at a predetermined position of the movable body portion Mm, and the magnetic sensor 64 shows an example in which a detection coil 7c is used as an origin sensor which detects a magnet provided at a predetermined position of the movable body portion Mm.

As shown in FIG. 1, the sensor board portion 62 includes a support portion 65 whose position is fixed in relation to the base portion 21s, and a printed circuit board 66 fixed to the support portion 65. Two reflection-type optical sensors (7x, 7e) are mounted on the printed circuit board 66. In this case, one sensor functions as an origin sensor 7x, and the other sensor functions as an encoder sensor 7e. A to-be-detected portion 8, which is provided on the circumferential surface Mmf of the movable body portion Mm and will be described later, can be detected by the reflection-type optical sensor Ds provided on the sensor board portion 62. The origin sensor 7x includes one light emitting unit and one light receiving unit and outputs an origin signal Z. The encoder sensor 7e includes one light emitting unit and three light receiving units for different phases which are arranged at equal pitches. The encoder sensor 7e outputs encoder signals A and B (the phase difference between the signal A and the signal B is 90°) by logic synthesis of the signals from the light receiving units. The logic synthesis reduces errors by means of averaging, as compared with the case where two light receiving units are used. In the logic synthesis, when the outputs of the three light receiving units are represented by P, Q, and R, it is possible to obtain the signal A through comparation (P-(P+R)/2) and the signal B through comparation (Q-(P+R)/2) and also possible to detect the rotation direction.

In the case where, as described above, the reflection-type optical sensor portion Ds for detecting the to-be-detected portion 8 provided on the circumferential surface Mmf of the movable body portion Mm is provided in the movable body detection portion Md, the rotational speed, etc. of the movable body portion Mm can be detected easily and reliably. Notably, the reflection-type optical sensor portion Ds is built in, it is desired to take the light blocking performance of the entire structure, including the housing portion 21, into consideration. Also, in the case where the origin sensor 7x and the encoder sensor 7e having a plurality of sensor portions are incorporated into the movable body detection portion Md, it becomes possible to completely detect the rotation state of the movable body portion Mm by using the three signals (the A-phase signal, the B phase-signal, and the origin signal) for detecting the rotational speed, the rotation direction, and the origin. Therefore, it becomes unnecessary to attach a separate rotation detector (an encoder or the like), which contributes further reduction of the size (reduction of the thickness).

Meanwhile, the to-be-detected portion 8, which is detected by the reflection-type optical sensor portion Ds; i.e. the sensors 7x and 7e, is provided on the outer circumferential surface of the above-described rotor holding portion 13. In this case, the top surface of one rail portion 14pr of the rotor holding portion 13 is formed into a flat surface along the circumferential direction, and, as shown in FIG. 5(b), a reflection mark 8x is provided at one location in the circumferential direction. Notably, FIG. 5(b) shows an unfolded view of the top surface of the rail portion 14pr. Thus, the position of the origin, which is called "Z-phase, is detected by the origin sensor 7x which detects the reflection mark 8x, specifically, detects the reflection mark 8x one time during one revolution.

Also, the top surface of the other rail portion 14qr of the rotor holding portion 13 is formed into a flat surface along the circumferential direction, and a to-be-detected pattern 8p shown in FIG. 5(a) is provided on the flat surface. The to-be-detected pattern 8p is a repeating pattern in which reflection portions 8pc and non-reflection portions 8pn are alternately provided. This to-be-detected pattern 8p is provided over 360° in the circumferential direction, and the number of repetitions is 360 in the exemplary case. The to-be-detected pattern 8p is detected by the encoder sensor 7e. In this case, the encoder sensor 7e includes a plurality of sensor portions (two sensor portions in the illustrated example), and one sensor portion detects the to-be-detected pattern 8p as an A-phase pattern, and the other sensor portion detects the to-be-detected pattern 8p as a B-phase pattern. An offset of 90° is present between the A-phase pattern and the B-phase pattern. Notably, FIG. 5(a) shows an unfolded view of the top surface of the rail portion 14qr.

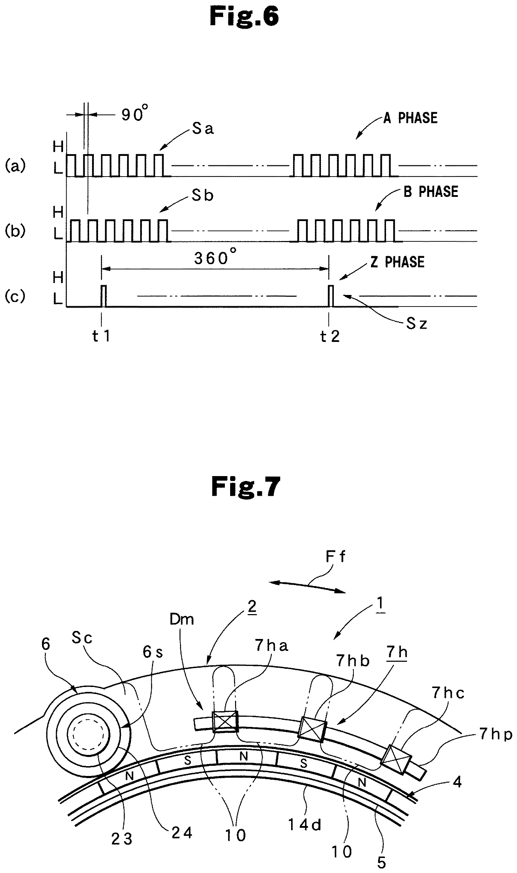

FIG. 6 shows detection signals output from the sensors 7x and 7e. FIG. 6(a) shows an A-phase signal Sa, FIG. 6(b) shows a B-phase signal Sb, and FIG. 6(c) shows a Z-phase signal Sz. The Z-phase signal Sz is detected at the times 11, t2, etc., and its detection interval is 360°. As shown in FIG. 6, the A-phase signal (Sa) and the B-phase signal (Sb) can be detected from the above-described encoder signals obtained (detected) by the encoder sensor 7e (the phase difference between the detection signals Sa and Sb is 90°). In this case, 360°, which is the detection interval of the Z phase signal Sz, is a mechanical angle (which corresponds to one revolution of the rotor), and 90°, which is the phase difference between the A-phase signal (Sa) and the B-phase signal (Sb), is an electrical angle.

In the case where, as described above, the encoder sensor 7e is configured as an integrated detection unit, since the encoder sensor 7e can be incorporated as a single sensor substantially, which contributes to further reduction of the size and the cost. In FIG. 6, H represents a high level, and L represents a low level. Notably, in general, an infrared light emitting element is frequently used for the light emitting unit of the optical sensor. In the case where the reflection surface is formed by a material which is extremely high in infrared spectral reflectivity, such as a magnesium alloy or an aluminum alloy, it is desired to form a reflection/non-reflection pattern by forming recesses and protrusions on the outer circumference or zone painting. Alternatively, in the case where the reflection surface is formed by a material which is low in infrared spectral reflectivity, such as a synthetic resin material, it is desired to form a reflection/non-reflection pattern by zone painting with a highly reflective paint or forming recesses and protrusions and plating them with a metal. As a result of provision of such a pattern in the interior of the thin rotary drive device 1, the encoder signals of the A, B, and Z phases can be detected.

In the exemplary case, as shown in FIG. 1, the rail groove 9 having a concave cross section and guiding the support rollers 6 is provided on the circumferential surface Mmf of the movable body portion Mm, and the to-be-detected portions 8 (8p, 8x) are provided on opposite sides of the rail groove 9. Therefore, it is possible to provide the rail groove 9 on the circumferential surface Mmf of the movable body portion Mm and is also possible to use it for the to-be-detected portions 8 (8p, 8x); i.e., it is possible to use the circumferential surface Mmf of the movable body portion Mm for many functions and many purposes.

In the above, an example of the detection system using the reflection-type optical sensor portion Ds has been described. However, as in the modification shown in FIGS. 7 to 9, a detection system using a magnetic sensor portion Dm may be constructed.

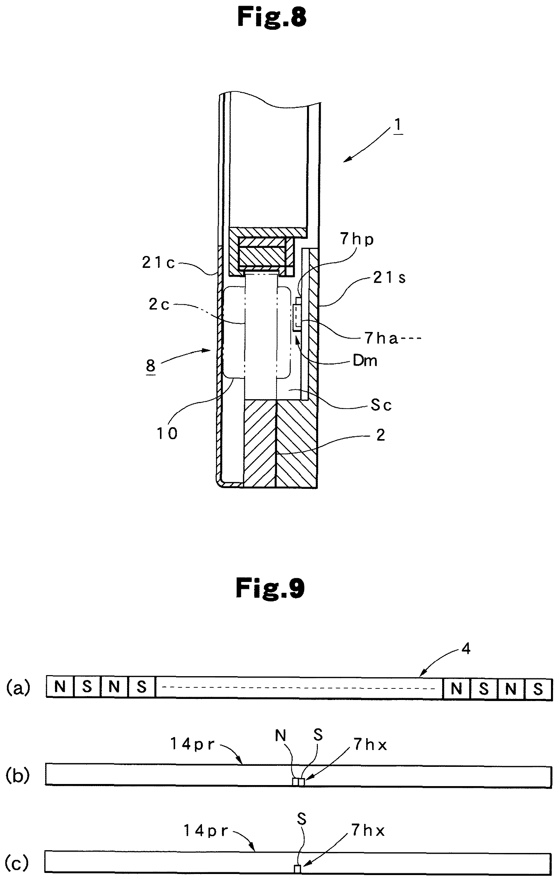

FIGS. 7 and 8 show that three Hall sensors (Hall ICs) 7ha, 7hb, and 7hc for detecting the magnetic poles of the rotor magnet 4 are disposed on a circuit board 7hp located near the rotor magnet 4 such that the Hall sensors are located at predetermined intervals along the circumferential direction Ff. The Hall sensors 7ha, 7hb, and 7hc have a function of detecting the positions of magnetic poles (S pole/N pole) and, in the exemplary case, switching control can be performed, on the basis of the detection result, for the rotary drive device 1 operated as a three-phase brushless motor. Notably, a sensor yoke is attached to the back face of the circuit board 7hp. This sensor yoke minimizes errors in detection of the positions of the magnetic poles, which occur in a processing circuit for the Hall sensors 7ha, 7hb, and 7hc at the time of rotation in the normal direction and at the time of rotation in the reverse direction. Specifically, a plate formed of a soft magnetic material such as iron is attached to the back surface of the circuit board 7hp.

In the detection system using the magnetic sensor portion Dm, the above-described magnetic sensor 63 (the Hall element 7h) or the above-described magnetic sensor 64 (the detection coil 7c) can be used as the origin sensor. In this case, as shown in FIG. 9(b) or 9(c), the to-be-detected portion 8 provided on the circumferential surface Mmf of the movable body portion Mm is a magnet 7hx or 7hy which is fixed at a specific position, such as the top surface of the rail portion 14pr (or 14qr) and which can be distinguished from the magnetic poles of the rotor magnet 4. The magnet 7hx or 7hy can be detected by the magnetic sensor 63 or 64. FIG. 9(a) shows a development of the magnetic poles in the rotor magnet 4, and FIG. 9(b) or 9(c) shows a development of the rail portion 14pr. Even in the case where such a magnetic sensor portion Dm is used, a detection system can be constructed using the same principle as the reflection-type optical sensor portion Ds described above.

Notably, as the magnetic sensor portion Dm, the Hall element 7h capable of detecting magnetic pole changes in the circumferential direction Ff of rotor magnet 4 is shown as an example, but the magnetic sensor portion Dm may be the above-mentioned detection coil 7c, a magnetoresistive element, or the like which has the same detection function. In the case where, as described above, one, two, or more elements selected from the Hall element 7h, the magnetoresistive element, and the detection coil 7c, which can detect magnetic pole changes in the circumferential direction Ff of rotor magnet 4 is incorporated in the magnetic sensor portion Dm, since the various types of sensors serving as the magnetic sensor portion Dm can be selectively used, it is possible to increase the degree of freedom in designing the detection system in which detection is performed by the magnetic sensor portion Dm and to easily optimize the detection system.

In the case of the illustrated rotary drive device 1 (brushless motor), three Hall sensors (Hall elements) 7ha, 7hb, and 7hc are disposed so as to detect the positions of the magnetic poles of the rotor magnet 4, and energization control for the respective phases (U phase, V phase, and W phase) is performed in accordance with the outputs of the respective Hall sensors 7ha, 7hb, and 7hc, whereby motor control, such as rotational speed control, is performed. However, it is not necessary required to directly detect the positions of the magnetic poles of the rotor magnet 4. For example, a step feed is performed at the time of start up, and an arithmetic processing (vector arithmetic processing) is performed by using an encoder or the like, whereby the positions of the magnetic poles are calculated indirectly. Namely, it is also possible to perform sensor-less drive control.

Specifically, the magnetic sensor portion Dm may be configured by a single chip having a plurality of sensor elements (a Hall element, a magnetoresistive element, etc.), and an A-phase signal and a B-phase signal may be produced from the detection signals obtained from the respective sensor portions by detecting very small angles due to magnetic field vectors. In the case where such a chip is used, since encoder signals (A-phase and B-phase signals) including 2¹⁰ - 2¹⁴ pulses per revolution of the rotor can be obtained by further dividing the number of the magnetic poles of the rotor magnet 4 (32 poles in the example), more accurate acceleration/deceleration control and speed control become possible.

In the case where such a magnetic sensor portion Dm is disposed in the accommodation space Sc of the stator 2, since it is possible to reduce magnetic noise due to switching of the coils 3, thereby obtaining stable encoder signals, q-axis control (torque direction) in vector control (d-q control) can be performed smoothly, and the current of the d-axis control (radial direction) can be minimized, whereby unnecessary power consumption that causes heat generation can be reduced.

In addition, in the case where a magnetic field change is generated at one location in the circumference (corresponding to one revolution) of the rotor magnet 4, since the origin can be detected by this magnetic sensor portion Dm (chip), the encoder signals corresponding to the A, B, and Z phases can be generated by the incorporated magnetic sensor portion Dm (chip) without separately adding a disposing space for an encoder. This contributes to reduction of the size and thickness of the rotary drive device 1, power saving, and improvement of controllability.

In the case where, as described above, the movable body detection portion Md is configured to include the magnetic sensor portion Dm for detecting the magnetic poles of the rotor magnet 4 provided in the movable body portion Mm, since magnetic pole changes in the circumferential direction Ff of the rotor magnet 4 can be detected directly or indirectly by the magnetic sensor portion Dm, there is an advantage of eliminating the necessity of providing at least a portion of a separate to-be detected portion 8. In addition, it becomes possible to selectively use the sensors in accordance with the version, etc. of the rotary drive device 1, if necessary, which contributes to enhancement of the degree of freedom in design.

Next, an example of the manufacturing procedure of the rotary drive device 1 according to the present embodiment will be described with reference to the drawings.

First, an unmagnetized rotor magnet 4 is fixed to a rotor yoke 5. In this case, the rotor yoke 5 and the rotor magnet 4 are positioned and fixed by using an adhesive or the like. Then, magnetizing treatment is performed on the unmagnetized rotor magnet 4 fixed to the rotor yoke 5.

Next, an inner ring portion 13a is attached to one end side of the rotor yoke 5 and the rotor magnet 4, united together, by using an adhesive or the like. Also, an outer ring portion 13b is attached to the other end side of the rotor yoke 5 and the rotor magnet 4 by using an adhesive or the like. Thus, assembly of a movable body intermediate assembly on the movable body portion Mm side ends.

On the other hand, a coil wire is wound around each stator core portion 2c of the stator 2. As a result, stator coils 3 are attached to the stator core portions 2c. Also, a printed circuit board 66, etc. are attached to a base portion 21s. Then, the stator 2 is attached to the base portion 21s, and the stator coils 3 of the stator 2 are connected to the printed circuit board 66, etc. by means of soldering or the like. As a result, assembly of a stationary body intermediate assembly on the stationary body portion Mc side ends.

Next, the movable body intermediate assembly is set in position in relation to the stationary body intermediate assembly. In this state, three support rollers 6 are accommodated in accommodation spaces Sc and attached to the base portion 21s. The attachment of each support roller 6 is performed by inserting a collar 24 into the inner hole of the support roller 6, inserting an attachment screw 23 into the collar 24 such that the attachment screw 23 passes therethrough, and screwing the attachment screw 23 into a screw hole formed in the base portion 21s. As a result, there is constructed the movable body support portion Ms in which the support rollers 6 are rotatably supported by the roller support shaft portions 6s each composed of the attachment screw 23 and the collar 24. After this, the cover portion 21c and base portion 21s are attached by using fixing screws 61, whereby the desired rotary drive device 1 can be obtained.

The rotary drive device 1 constructed as described above can be driven to rotate as a three-phase brushless motor by connecting the stator coils 3 and the sensors to an unillustrated drive controller via the circuit board 22. In this case, the stator coils 3 of the respective phases can be connected by a known connection method such as star connection or delta connection. In particular, torque ripple can be reduced by adopting a bipolar drive scheme. Although the case of three phases is shown as an example, the rotary drive device 1 can be implemented by various multiphase methods such as two-phase, four-phase, and five-phase methods. The dimensions of the rotary drive device 1 shown in the embodiment are such that the outer diameter is 150 mm, the inner diameter (the diameter of the hollow portion Sa) is 80 mm, and the thickness in the axial direction Fs (the width) is 10 mm.

FIGS. 10 and 11 show an example of the case where the rotary drive device 1 is used as a center selvedge drive apparatus Mu in a direct-electromagnetic-drive-type rotary selvedge system for a loom. In the example, a pair of rotary drive devices 1 are attached to an attachment portion 81. As shown in FIG. 11, in this center selvedge drive apparatus Mu, the two rotary drive devices 1 are disposed side by side in the axial direction Fs so that they overlap each other with a small gap therebetween. Notably, 82 indicates a heald for splitting warp threads upward and downward.

The center selvedge drive apparatus Mu has a function of entangling a selvedge thread in a weft thread to prevent fabric from fraying on both sides of the travel direction. A center selvedge is a central part of a wide fabric in the feed direction where weft and selvedge threads are entangled together at two locates, and enables simultaneous formation of two rolls of fabric, thereby improving productivity. The center selvedge drive apparatus Mu is disposed between warp threads.

Notably, since textiles and knitted fabrics are usually composed of warp and weft threads, the warp threads are alternately raised and lowered by the heald, and a weft thread is passed between the warp threads near the top and bottom dead center of the heald. However, fraying occurs at end portions. For this reason, a selvedge thread is entangled with the weft thread at the end portions to prevent fraying. Since the rotary drive device 1 cannot be installed unless its overall width is limited to about 20 mm, conventionally, two rotary drive devices are disposed in series in the fabric feed direction.

The center selvedge drive apparatus Mu shown in the present embodiment uses two rotary drive devices 1 configured to have a width dimension of 10 mm. As shown in FIG. 11, the rotary drive devices 1 are disposed side by side in the axial direction Fs so that they overlap each other with a small gap therebetween. Notably, one of the two identical rotary drive devices 1 is used as a rotary drive device 1x for selvedge threads Ta and Tb, and the other rotary drive device is used as a rotary drive device 1y for selvedge threads Tc and Td. In this case, the selvedge threads Ta, Tb, Tc, and Td are respectively supplied from unillustrated bobbins. The selvedge threads Ta and Tb are supplied from the upstream side of the one rotary drive device 1x toward the downstream side through the thread guides 31U and 31L. The selvedge threads Tc and Td are supplied from the upstream side of the other rotary drive device 1y toward the downstream side through the thread guides 31U and 31L.

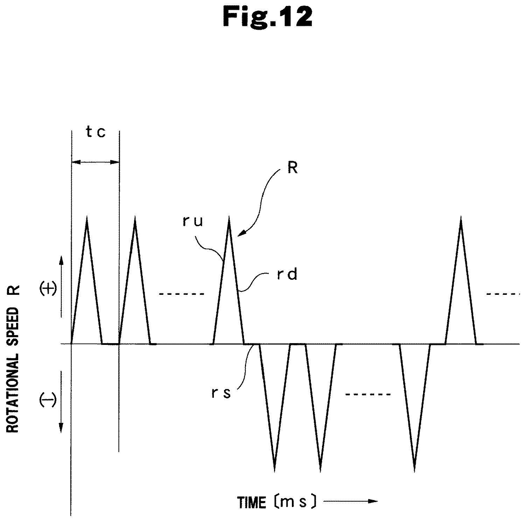

Each of the rotary drive devices 1x and 1y is driven and controlled such that its rotational speed R changes as shown in FIG. 12. Namely, a cycle tc in which the rotational speed ru increases due to sharp acceleration from a stopped state, the rotational speed rd then decreases due to sharp deceleration, and the rotary drive device is stopped for a certain period of time rs is repeated. During that period, the vertical positions of the selvedge thread Ta and the selvedge thread Tb are reversed at unit intervals of 180° (180° rotation with acceleration and deceleration), whereby they can be entangled with weft thread. After repeating this operation about 20 times, the rotation direction is reversed, and the same operation is performed. Notably, the certain period of time rs during which the rotary drive device is stopped is a concept which encompasses not only the ordinary stopped state in which the speed is 0, but also the slow state in which the speed is very low (generally, equal to or less than 1/5 of the maximum speed).

As described above, the rotary drive device 1 shown as an example can reduce its overall thickness in the axial direction Fs as compared with its overall length in the radial direction. Therefore, even in the case where the rotary drive device 1 is used in a loom including the center selvedge drive apparatus Mu configured by combining two rotary drive devices 1, identical rotary drive devices can be disposed such that they overlap each other in the axial direction Fs. Accordingly, the entire loom can be downsized and simplified, and adjustment of the relative position between the rotary drive devices 1, etc. is unnecessary or can be performed very easily. In addition, it is excellent in cost saving and manufacturability (e.g., assembly becomes easily). Furthermore, since the rotary drive device is configured as an inner-rotor-type in which the movable body portion Mm is disposed inside the stationary body portion Mc, it is possible to reduce the moment of inertia of the movable body portion Mm, thereby reducing the current (electric power) during acceleration and deceleration, and to increase the heat dissipation area of the stator 2. Accordingly, the rotary drive device 1 is most suitably used in, for example, an automatic loom in which threads or the like are supplied by utilizing the hollow portion (space) Sa.

The rotary drive device 1 according to the present embodiment comprises, as a basic structure, the movable body portion Mm including the ring-shaped rotor yoke 5 and the rotor magnet 4 having a plurality of magnetic poles disposed along the circumferential direction Ff of the rotor yoke 5; the stationary body portion Mc in which the plurality of stator core portions 2c facing the movable body portion Mm are disposed on the ring-shaped stator 2 at predetermined intervals along the circumferential direction Ff; and the movable body detection portion Md including the encoder sensor 7e which is disposed in at least one accommodation space Sc formed in the stator 2 by removing some of the stator core portions 2c and which detects at least the rotational speed R of the movable body portion Mm. Therefore, a conventionally used large rolling bearing for rotation of the movable body portion Mm can be eliminated. As a result, it is possible to greatly reduce the weight of the movable body portion Mm and further reduce the moment of inertia while coping with high torque. Thus, sufficient high-speed response of the rotary drive device 1 can be ensured, and the cost and energy saving performance can be further improved.

In addition, the rotary drive device 1 comprises the stationary body portion Mc in which the plurality of stator core portions 2c facing an outer circumferential portion of the movable body portion Mm are disposed on an inner circumferential portion of the ring-shaped stator 2 at predetermined intervals along the circumferential direction Ff; and the movable body support portion Ms composed of the plurality of support rollers 6 whose positions are fixed in relation to the stator 2 and which rotatably support the movable body portion Mm by their roller circumferential surfaces 6f in contact with an outer circumferential portion or an inner circumferential portion of the movable body portion Mm. Therefore, the entire structure can be simplified, and, in particular, it is possible to realize reduction of the overall thickness of the apparatus. As a result, it is possible to provide the rotary drive device 1 which is excellent in versatility and expandability; for example, which can sufficiently meet the demand of disposing the rotary drive device 1 in a narrow space or the like where the spacing is about 10 mm or less.

In particular, since there is provided the movable body detection portion Md including the encoder sensor 7e which is disposed in at least one accommodation space Sc formed in the stator 2 by removing some of the stator core portions 2c and which detects at least the rotational speed R of the movable body portion Mm. Therefore, the sensors such as the encoder sensor 7e can be disposed within a so-called occupied space (the space occupied by the stator 2), and it is unnecessary to secure a separate disposing space. Thus, it is possible to realize reduction of the size (thickness) and the weight and cost saving. In addition, a sensor-less motor in which the main body of the rotary drive device and the sensors are integrated can be easily constructed.

The most preferred embodiment, including its modification, has been described in detail. However, the present invention is not limited to such embodiment, and, as to structures of details, shapes, materials, quantities, numerical values, etc., alteration, addition, and deletion can be performed arbitrarily within a range not departing from the gist of the present invention.

For example, the number of the stator core portions 2c (the number of poles) and the number of poles of the rotor magnet 4 are not limited to the number (the number of poles) shown as an example. In general, it is possible to implement the invention by setting the number of poles to an arbitrary number (two or more). Although use of radial bearings as the support rollers 6 is desirable, a roller function realized by using rollers or the like which are simple in structure is not excluded. Although it is desired that, in addition to the encoder sensor 7e, the encoder sensor 7e for detecting the rotation direction of the movable body portion Mm and the origin sensor 7x for detecting the origin position Xo of the movable body portion Mm are contained in the movable body detection portion Md, they can be combined with other structures having the same function, and they are not essential constitutional elements. In particular, although it is desirable to provide the accommodation spaces Sc such that the number of the accommodation spaces Sc becomes equal to a multiple of the number of the phases of the drive currents for driving the stator coils 3, they are not essential constituent elements, because they can be configured as the detection coils 7c. The case where the reflection-type optical sensor portion Ds and magnetic sensor portion Dm are used as the movable body detection portion Md has been shown as an example. However, the movable body detection portion Md may be any of detection means using other principles, such as a capacitance-detection-type detection means or a magnetoresistive-element-type detection means. Also, although the to-be-detected portion 8 having the to-be-detected pattern 8p formed by combining the reflection portions 8pc and the non-reflection portions 8pn has been shown as an example, the to-be-detected pattern 8p may be a to-be-detected pattern 8p formed by combining recesses and protrusions, and it is possible to detect a to-be-detected portion 8 composed of transparent portions and non-transparent portions by a transmission-type optical sensor portion.

### Industrial Applicability

The rotary drive device according to the present invention can be used for various types of applications, such as the illustrated automatic loom, an RGB color filter (optical device), a blower, an aperture controller, a shutter device (optical control device), a hand device of a robot, and an in-wheel motor, in which a hollow portion is secured, and various types of specific function portions are added to the hollow portion and used.

## Claims

1. A rotary drive device comprising a stationary body portion which includes a stator having a plurality of stator core portions integrally provided and stator coils wound around the stator core portions, and a movable body portion which includes a rotor magnet having a plurality of magnetic poles facing the stationary body portion and a rotor yoke attached to the rotor magnet, the rotary drive device being **characterized by** comprising:
the movable body portion which includes the rotor yoke formed into a ring shape and the rotor magnet having a plurality of magnetic poles disposed along a circumferential direction of the rotor yoke;
the stationary body portion in which a plurality of stator core portions facing the movable body portion are provided on the stator formed into a ring shape such that the stator core portions are disposed at predetermined intervals along the circumferential direction; and
a movable body detection portion including an encoder sensor which is disposed in at least one accommodation space formed in the stator by removing some of the stator core portions and which detects at least the rotational speed of the movable body portion.

2. A rotary drive device according to claim 1, wherein the movable body detection portion includes, in addition to the encoder sensor, an origin sensor for detecting an origin position of the movable body portion.

3. A rotary drive device according to claim 1, wherein the number of the accommodation spaces is equal to a multiple of the number of phases of drive currents for driving the stator coils.

4. A rotary drive device according to claim 1, wherein the stator includes a movable body support portion which includes a plurality of support rollers which are disposed in the accommodation spaces so that their roller circumferential surfaces come into contact with the movable body portion, thereby rotatably supporting the movable body portion.

5. A rotary drive device according to claim 1, wherein the movable body detection portion includes a reflection-type optical sensor portion for detecting a to-be-detected portion provided on a circumferential surface of the movable body portion.

6. A rotary drive device according to claim 5, wherein a
to-be-detected portion is provided on the circumferential surface of the movable body portion, the to-be-detected portion having a to-be-detected pattern formed by combining reflection portions and non-reflection portions which are detected by the reflection-type optical sensor portion.

7. A rotary drive device according to claim 6, wherein a rail groove having a concave cross section and guiding the support rollers is provided on the circumferential surface of the movable body portion, and the to-be-detected portion is provided at each of positions on opposite sides of the rail groove.

8. A rotary drive device according to claim 6, wherein the encoder sensor detects the to-be-detected pattern by a plurality of sensor portions, and a phase difference between detection signals obtained from the plurality of sensor portions is set to 90°, whereby an A-phase signal and a B-phase signal are detected.

9. A rotary drive device according to claim 1, wherein the movable body detection portion includes a magnetic sensor portion for detecting the magnetic poles of the rotor magnet provided in the movable body portion.

10. A rotary drive device according to claim 9, wherein the magnetic sensor portion includes one, two, or more elements which can detect magnetic pole changes in the circumferential direction of the rotor magnet, the elements being chosen from a Hall element, a magnetoresistive element, and a detection coil.

11. A rotary drive device according to claim 9 or 10, wherein the magnetic sensor portion is constituted by a single chip including a plurality of sensor portions, and an A-phase signal and a B-phase signal are generated by using detection signals obtained from the sensor portions.
